# EUROPEAN PATENT SPECIFICATION

(11) **EP 3 406 902 B1**
(45) Date of publication and mention of the grant of the patent: **15.03.2023**
(21) Application number: 18173826.1
(22) Date of filing: 23.05.2018
(51) Int. Cl.: F02M 37/04, F02M 37/06, F04B 1/324, F04B 49/12, F04B 1/20, F04B 7/00

(54) **VARIABLE DISPLACEMENT FUEL PUMP**
KRAFTSTOFFVERSTELLPUMPE
POMPE À CARBURANT À CYLINDRÉE VARIABLE

(30) Priority: 23.05.2017 US 201715602364
(43) Date of publication of application: 28.11.2018
(73) Proprietor: Hamilton Sundstrand Corporation, Charlotte, NC 28217-4578 (US)
(72) Inventor: NI, Weishun Willaim, Rockton, IL Illinois 61072 (US); KADERABEK, Dennis L., Calendonia, IL Illinois 61011 (US); GOY, Edward W., Crystal Lake, IL Illinois 60014 (US); ERICKSON, Dennis A., Rockton, IL Illinois 61072 (US); LAURIAT, David, DeKalb, IL Illinois 60115 (US)
(74) Representative: Dehns

(56) References cited:
- EP-A2- 2 025 901
- EP-A2- 2 341 230
- US-A- 6 102 001
- US-A1- 2001 054 290
- US-A1- 2004 011 052
- US-A1- 2006 174 614

## Description

### BACKGROUND

The subject matter disclosed herein relates to fuel pumps, and more particularly, to variable displacement fuel pumps with electronic actuators.

High pressure fuel systems are typically used in a variety of applications to provide fuel flow and pressure sufficient to engines during various levels of demand. Fuel systems often designed to provide excess fuel flow to ensure fuel demands are met during all operation conditions. Often, excess fuel flow can waste energy and cause extra fuel heating. Another critical condition to which the fuel system must respond occurs during a quick acceleration. When the engine is accelerated, energy must be furnished to the turbine in excess of that necessary to maintain a constant RPM. However, if the fuel flow increases too rapidly, an overrich mixture may be produced causing a surge.

In more detail, such systems typically operate such that unused fuel is recirculated continuously. The recirculation can be achieved by a bypass valve and a high pressure fixed displacement fuel pump but the valve and pump lead to the fuel heating described above. Further, the fixed displacement pump is typically oversized to provide the excess fuel capacity and this leads to the recirculation of large amounts of pressurized fuel. As the fuel is returned and recirculated, the pressure drops and heat is generated.

EP 2341230 and EP 2025901 relate to fuel metering systems. Document EP2341230 discloses a variable displacement piston pump connecting a fuel source to a gas turbine engine and engine controller. A hanger actuator is operably connected to the variable displacement pump, and the engine controller controls fuel flow by determining and moving a hanger actuator to a desired position.

### BRIEF SUMMARY

According to an embodiment, a fuel system is provided in claim 1 and includes a fuel source, a variable displacement fuel pump, including a pump body, a barrel disposed within the pump body, at least one piston disposed in the barrel, wherein the at least one piston is configured to reciprocate within the barrel to provide a fuel flow, and an electronic control actuator operatively coupled to the barrel, wherein the control actuator rotates the barrel to a selected barrel angle relative to the at least one piston in response to a desired fuel flow parameter, a controller to receive a thrust demand parameter to provide the desired fuel flow parameter to the electronic control actuator, and a thrust output device to receive the fuel flow to provide a thrust output corresponding to the thrust demand parameter.

According to an embodiment, a method is defined in claim 5 and provides a desired thrust output corresponding to a thrust demand parameter includes receiving the thrust demand parameter via a controller, providing a desired fuel flow parameter via the controller, providing a fuel flow via a variable displacement fuel pump, including a pump body, a barrel disposed within the pump body, and at least one piston disposed in the barrel, wherein the at least one piston is configured to reciprocate within the barrel to provide the fuel flow, and rotating the barrel of the variable displacement fuel pump to a selected barrel angle relative to the at least one piston in response to the desired fuel flow parameter via an electronic control actuator.

Technical function of the embodiments described above includes an electronic control actuator operatively coupled to the barrel, wherein the control actuator rotates the barrel to a selected barrel angle relative to the at least one piston in response to a desired fuel flow.

Other aspects, features, and techniques of the embodiments will become more apparent from the following description taken in conjunction with the drawings.

### BRIEF DESCRIPTION OF THE DRAWINGS

The subject matter is particularly pointed out and distinctly claimed in the claims at the conclusion of the specification. The foregoing and other features, and advantages of the embodiments are apparent from the following detailed description taken in conjunction with the accompanying drawings in which like elements are numbered alike in the FIGURES:
FIG. 1 is a schematic view of an embodiment of a fuel system; and
FIG. 2 is a partial cross sectional view of an embodiment of a variable displacement pump for use with the fuel system of FIG. 1.

### DETAILED DESCRIPTION

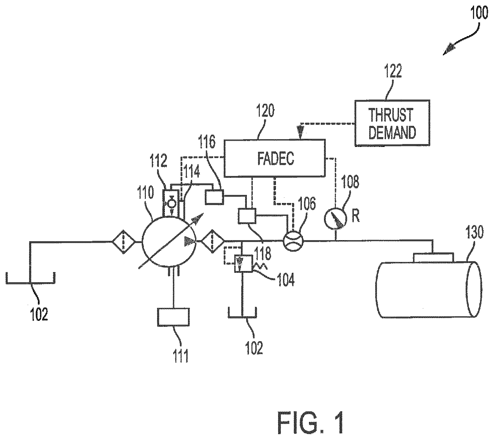

Referring to the drawings, FIG. 1 shows a fuel system 100 according to one embodiment. In the illustrated embodiment, the fuel system 100 includes a fuel source 102, a variable displacement pump 110, a high pressure relief valve 104, a mass fuel metering sensor 106, a fuel flow pressure sensor 108, a full authority digital engine control (FADEC) 120, and a thrust output device 130. In the illustrated embodiment, the fuel system 100 provides a fuel flow from the fuel source 102 to the thrust output device 130 at a desired fuel flow rate to provide a desired thrust indicated by an operator.

The fuel source 102 can include fuel tanks or other portions of the fuel system 100 not shown. In the illustrated embodiment, the fuel source 102 can provide fuel to the variable displacement pump 110. In certain embodiments, excess or relief fuel flow from the variable displacement pump 110 can be redirected to the fuel source 102 via the high pressure relief valve 104.

In the illustrated embodiment, the thrust output device 130 is any suitable thrust output device, including, but not limited to, a gas turbine engine. Gas turbine engine thrust output is primarily controlled by the amount of fuel supplied to the engine combustion chamber via the engine nozzles. Therefore, the thrust output of the gas turbine engine or any suitable thrust output device 130 is based on the amount of fuel supplied to the thrust output device 130. During flight operations, thrust demands can change rapidly, requiring rapid changes in fuel flow. In certain embodiments, thrust demands can be independent from engine operation speed.

In the illustrated embodiment, a variable displacement pump 110 can provide a desired fuel flow to the thrust output device 130 without excess fuel being returned to the fuel source 102. In the illustrated embodiment, the variable displacement pump 110 is driven by a pump drive 111. The pump drive 111 can be provided by an engine or any other suitable source, including the thrust output device 130. In the illustrated embodiment, the variable displacement pump 110 includes an electronic control actuator 112 to control the displacement of the variable displacement pump 110 to provide a desired fuel flow rate independent of the pump drive 111 speed in response to the thrust demand 122 received by the FADEC 120.

In the illustrated embodiment, the mass fuel metering sensor 106 can measure mass fuel flow from the variable displacement pump 110 to the thrust output device 130. In the illustrated embodiment, the mass fuel metering sensor 106 can provide fine control and transient control of fuel flow to the thrust output device 130. In the illustrated embodiment, as the mass fuel metering sensor 106 measures fuel flow there through, any excess flow can be relieved by the high pressure relief valve 104 to be released back into the fuel source 102. The high pressure relief valve 104 can prevent fuel pressure from exceeding a desired pressure. The operation of the mass fuel metering sensor 106 can be controlled by the FADEC 120 in response to the thrust demand 122 and the fuel flow pressure sensor 108.

In the illustrated embodiment, the FADEC 120 can receive parameters regarding flight operation and control various aspects of the fuel system 100, including the variable displacement pump 110. In the illustrated embodiment, the FADEC 120 can receive a thrust demand parameter 122 from an operator. In certain embodiments, the thrust demand parameter 122 can be calculated by other flight systems. Further, in the illustrated embodiment, the FADEC 120 can receive information regarding the fuel flow and fuel pressure received by the thrust output device 130 via a fuel flow pressure sensor 108. In the illustrated embodiment, the fuel flow pressure 108 measures one or more of fuel flow and pressure and provides these parameters to the FADEC 120.

In response to the measured parameters from the fuel flow pressure sensor 108 and the thrust demand parameter 122, the FADEC 120 can adjust the control actuator 112 of the variable displacement pump 110 to provide a desired fuel flow to the thrust output device 130. In certain applications, the FADEC 120 can provide the desired fuel flow to the thrust output device 130 by precisely controlling the output of the variable displacement pump 110. In the illustrated embodiment, the FADEC 120 can minimize flow to prevent excess return or bypass of fuel flow to the fuel source 102 via the high pressure relief valve 104. In certain embodiments, the mass fuel metering sensor 106 may be utilized for fine and transient adjustments of fuel flow to the thrust output device 130.

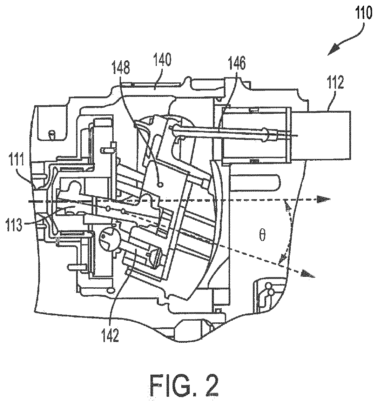

Referring to FIG. 2, an example variable displacement pump 110 is shown. In the illustrated embodiment, the variable displacement pump 110 includes the electronic control actuator 112, an actuator rod 146, a pump body 140, pistons 142, and a barrel 148. In the illustrated embodiment, a variable displacement pump 110 can vary the displacement or the amount of fluid pumped per revolution of the pump drive 111 while the variable displacement pump 110 is running. In the illustrated embodiment, the variable displacement pump 110 is an axial piston pump. In the illustrated embodiment, the control actuator 112 can tilt or rotate the barrel 148 relative to the pistons 142 to control the output of the variable displacement pump 110 independent of the input provided by the pump drive 111. Advantageously, the use of a variable displacement pump 110 allows for high efficiency at various flow requirements.

In the illustrated embodiment, the pistons 142 reciprocate within the barrel 148. The pistons 142 are powered by the pump drive 111. In the illustrated embodiment, the pistons 142 are disposed in cylinders arranged parallel to each other and rotating around a central shaft 113 powered by the pump drive 111. In the illustrated embodiment, the variable displacement pump 110 can include any suitable number of pistons 142. In the illustrated embodiment, the variable displacement pump 110 includes 9 pistons.

In the illustrated embodiment, the barrel 148 can tilt or rotate relative to the pistons 142. The angle of the barrel 148 can change the stroke of the pistons 142. The angle between the barrel 148 and the center drive shaft 111 can be described as angle theta. In the illustrated embodiment, the variable displacement pump 110 is a bent swash plate axis pump, wherein the barrel 148 provides a maximum displacement capacity when the angle theta is maximized, while the variable displacement pump 110 provides 0 or minimum pumping capacity when the angle theta is zero or inline.

In the illustrated embodiment, the electronic control actuator 112 is coupled to the barrel 148 via an actuator rod 146. The electronic control actuator 112 can adjust the angle theta of the barrel 148 to vary the displacement of the variable displacement pump 110. In the illustrated embodiment, the position of the electronic control actuator 112 can be related to the angle theta of the barrel 148 and further be related to a fuel flow rate of the variable displacement pump 110 for a given pump drive 111 speed. Therefore, in certain embodiments, the FADEC 120 can relate and command the position of the electronic control actuator 112 to provide a desired fuel flow rate.

Further, in certain embodiments the electronic control actuator 112 has a servomechanism for position feedback to the FADEC 120 to allow for closed loop control of the variable displacement pump 110. In certain embodiments, the electronic control actuator 112 can be a rotary actuator, a linear actuator, or any other suitable actuator. Advantageously, the electronic control actuator 112 can vary the output of the variable displacement pump 110 independent of the speed of the pump drive 111. Further, the use of an electronic control actuator 112 can allow for a rapid flow response (within 30 milliseconds) within the fuel system 100 to allow for rapid actuated flow slew rates.

Advantageously, by utilizing the variable displacement pump 110 with the electronic control actuator 112, a desired fuel flow can be provided with minimal excess fuel flow being directed back to the fuel source 102. By maintaining a desired fuel flow rate, excess heating of fuel is minimized, minimizing fuel contamination and allowing for greater reliability. Further, the use of the electronic actuator 112 allows for simplified components within the fuel system 100 to simplify assembly and minimize weight. Further, improved transient response due to the electronic actuator 112 can prevent lean die-out or rich blow out conditions by allowing improved fuel flow control in transient applications.

The terminology used herein is for the purpose of describing particular embodiments only and is not intended to be limiting of the embodiments, While the description of the present embodiments has been presented for purposes of illustration and description, it is not intended to be exhaustive or limited to the embodiments in the form disclosed. Many modifications, variations, alterations, substitutions or equivalent arrangement not hereto described will be apparent to those of ordinary skill in the art without departing from the subject-matter of the appended claims. Additionally, while various embodiments have been described, it is to be understood that aspects may include only some of the described embodiments. Accordingly, the embodiments are not to be seen as limited by the foregoing description, but are only limited by the subject-matter of the appended claims.

## Claims

1. A fuel system (100), comprising:
a fuel source (102);
a variable displacement fuel pump (110), including:
a pump body (140);
a barrel (148) disposed within the pump body (140);
at least one piston (142) disposed in the barrel (148), wherein the at least one piston (142) is configured to reciprocate within the barrel (148) to provide a fuel flow; and
an electronic control actuator (112) operatively coupled to the barrel (148), wherein the electronic control actuator (112) rotates the barrel (148) to a selected barrel angle relative to the at least one piston (142) in response to a desired fuel flow parameter;
a controller to receive a thrust demand parameter to provide the desired fuel flow parameter to the electronic control actuator (112); and
a thrust output device (130) to receive the fuel flow to provide a thrust output corresponding to the thrust demand parameter;
a high-pressure relief valve (104) connected between the variable displacement fuel pump and the thrust output device;
a mass fuel metering sensor (106) connected between the high-pressure relief valve and the thrust output device; and
a fuel flow pressure sensor (108) connected between the mass fuel metering sensor and the thrust output device;
wherein the controller is configured to select the barrel angle to provide a desired fuel flow rate in response to the thrust demand parameter, fuel mass of the fuel flow reported by the mass fuel metering sensor, and pressure of the fuel flow reported by the fuel flow pressure sensor to limit fuel flow returned to the fuel source through the high-pressure relief valve.

2. The fuel system of claim 1, wherein the electronic control actuator (112) is an electronic rotary actuator.

3. The fuel system of claim 1, wherein the electronic control actuator (112) is an electronic linear actuator.

4. The fuel system of claim 1, wherein the electronic control actuator (112) includes a servomechanism.

5. A method to provide a desired thrust output corresponding to a thrust demand parameter, the method comprising:
receiving the thrust demand parameter via a controller;
receiving fuel mass of a fuel flow from a mass fuel metering sensor;
receiving pressure of a fuel flow reported by a fuel flow pressure sensor;
providing a desired fuel flow parameter via the controller, wherein the desired fuel flow parameter is determined using the received thrust demand, the fuel mass of the fuel flow, and the pressure of the fuel flow;
providing a fuel flow via a variable displacement fuel pump, including:
a pump body;
a barrel disposed within the pump body; and
at least one piston disposed in the barrel, wherein the at least one piston is configured to reciprocate within the barrel to provide the fuel flow; and
rotating the barrel of the variable displacement fuel pump to a selected barrel angle relative to the at least one piston in response to the desired fuel flow parameter via an electronic control actuator.

6. The method of claim 5, wherein the electronic control actuator is an electronic rotary actuator.

7. The method of claim 5, wherein the electronic control actuator is an electronic linear actuator.

8. The method of claim 5, wherein the electronic control actuator includes a servo mechanism.

## Patentansprüche

1. Kraftstoffsystem (100), umfassend:
eine Kraftstoffquelle (102);
eine Kraftstoffverstellpumpe (110), beinhaltend:
einen Pumpenkörper (140);
einen Zylinder (148), der innerhalb des Pumpenkörpers (140) angeordnet ist;
zumindest einen Kolben (142), der in dem Zylinder (148) angeordnet ist, wobei der zumindest eine Kolben (142) konfiguriert ist, um sich innerhalb des Zylinders (148) hin- und herzubewegen, um einen Kraftstofffluss bereitzustellen; und
ein elektronisches Steuerstellglied (112), das an den Zylinder (148) wirkgekoppelt ist, wobei das elektronische Steuerstellglied (112) den Zylinder (148) als Reaktion auf einen gewünschten Kraftstoffflussparameter zu einem ausgewählten Zylinderwinkel relativ zu dem zumindest einen Kolben (142) dreht;
eine Steuerung zum Empfangen eines Schubbedarfsparameters, um den gewünschten Kraftstoffflussparameter an das elektronische Steuerstellglied (112) bereitzustellen; und
eine Schubausgabevorrichtung (130) zum Empfangen des Kraftstoffflusses, um eine Schubausgabe bereitzustellen, die dem Schubbedarfsparameter entspricht;
ein Hochdruckentlastungsventil (104), das zwischen der Kraftstoffverstellpumpe und der Schubausgabevorrichtung verbunden ist;
einen Kraftstoffmassenmesssensor (106), der zwischen dem Hochdruckentlastungsventil und der Schubausgabevorrichtung verbunden ist; und
einen Kraftstoffflussdrucksensor (108), der zwischen dem Kraftstoffmassenmesssensor und der Schubausgabevorrichtung verbunden ist;
wobei die Steuerung konfiguriert ist, um den Zylinderwinkel auszuwählen, um eine gewünschte Kraftstoffflussrate als Reaktion auf den Schubbedarfsparameter, Kraftstoffmasse des Kraftstoffflusses, die durch den Kraftstoffmassenmesssensor gemeldet wird, und Druck des Kraftstoffflusses, der durch den Kraftstoffflussdrucksensor gemeldet wird, bereitzustellen, um Kraftstofffluss zu begrenzen, der durch das Hochdruckentlastungsventil zu der Kraftstoffquelle zurückgeführt wird.

2. Kraftstoffsystem nach Anspruch 1, wobei das elektronische Steuerstellglied (112) ein elektronisches Drehstellglied ist.

3. Kraftstoffsystem nach Anspruch 1, wobei das elektronische Steuerstellglied (112) ein elektronisches Linearstellglied ist.

4. Kraftstoffsystem nach Anspruch 1, wobei das elektronische Steuerstellglied (112) einen Servomechanismus beinhaltet.

5. Verfahren zum Bereitstellen einer gewünschten Schubausgabe entsprechend einem Schubbedarfsparameter, wobei das Verfahren Folgendes umfasst:
Empfangen des Schubbedarfsparameters über eine Steuerung;
Empfangen von Kraftstoffmasse eines Kraftstoffflusses von einem Kraftstoffmassenmesssensor;
Empfangen von Druck eines Kraftstoffflusses, der durch einen Kraftstoffflussdrucksensor gemeldet wird;
Bereitstellen eines gewünschten Kraftstoffflussparameters über die Steuerung, wobei der gewünschte Kraftstoffflussparameter unter Verwendung des empfangenen Schubbedarfs, der Kraftstoffmasse des Kraftstoffflusses und des Drucks des Kraftstoffflusses bestimmt wird;
Bereitstellen eines Kraftstoffflusses über eine Kraftstoffverstellpumpe, beinhaltend:
einen Pumpenkörper;
einen Zylinder, der innerhalb des Pumpenkörpers angeordnet ist; und
zumindest einen Kolben, der in dem Zylinder angeordnet ist, wobei der zumindest eine Kolben konfiguriert ist, um sich innerhalb des Zylinders hin- und herzubewegen, um den Kraftstofffluss bereitzustellen; und
Drehen des Zylinders der Kraftstoffverstellpumpe zu einem ausgewählten Zylinderwinkel relativ zu dem zumindest einen Kolben als Reaktion auf den gewünschten Kraftstoffflussparameter über ein elektronisches Steuerstellglied.

6. Verfahren nach Anspruch 5, wobei das elektronische Steuerstellglied ein elektronisches Drehstellglied ist.

7. Verfahren nach Anspruch 5, wobei das elektronische Steuerstellglied ein elektronisches Linearstellglied ist.

8. Verfahren nach Anspruch 5, wobei das elektronische Steuerstellglied einen Servomechanismus beinhaltet.

## Revendications

1. Système de carburant (100), comprenant :
une source de carburant (102) ;
une pompe à carburant à cylindrée variable (110), comportant :
un corps de pompe (140) ;
un cylindre (148) disposé à l'intérieur du corps de pompe (140) ;
au moins un piston (142) disposé dans le cylindre (148), dans lequel l'au moins un piston (142) est configuré pour effectuer un mouvement alternatif à l'intérieur du cylindre (148) pour fournir un écoulement de carburant ; et
un actionneur de commande électronique (112) fonctionnellement couplé au cylindre (148), dans lequel l'actionneur de commande électronique (112) fait tourner le cylindre (148) à un angle de cylindre sélectionné par rapport à l'au moins un piston (142) en réponse à un paramètre d'écoulement de carburant souhaité ;
un dispositif de commande pour recevoir un paramètre de demande de poussée pour fournir le paramètre d'écoulement de carburant souhaité à l'actionneur de commande électronique (112) ; et
un dispositif de sortie de poussée (130) pour recevoir l'écoulement de carburant afin de fournir une sortie de poussée correspondant au paramètre de demande de poussée ;
une soupape de surpression haute pression (104) connectée entre la pompe à carburant à cylindrée variable et le dispositif de sortie de poussée ;
un capteur de dosage massique de carburant (106) connecté entre la soupape de surpression haute pression et le dispositif de sortie de poussée ; et
un capteur de pression d'écoulement de carburant (108) connecté entre le capteur de dosage massique de carburant et le dispositif de sortie de poussée ;
dans lequel le dispositif de commande est configuré pour sélectionner l'angle du cylindre pour fournir un débit de carburant souhaité en réponse au paramètre de demande de poussée, à la masse de carburant de l'écoulement de carburant signalée par le capteur de dosage massique de carburant et à la pression de l'écoulement de carburant signalée par le capteur de pression d'écoulement de carburant pour limiter l'écoulement de carburant renvoyé à la source de carburant via la soupape de surpression haute pression.

2. Système de carburant selon la revendication 1, dans lequel l'actionneur de commande électronique (112) est un actionneur rotatif électronique.

3. Système de carburant selon la revendication 1, dans lequel l'actionneur de commande électronique (112) est un actionneur linéaire électronique.

4. Système de carburant selon la revendication 1, dans lequel l'actionneur de commande électronique (112) comporte un servomécanisme.

5. Procédé pour fournir une sortie de poussée souhaitée correspondant à un paramètre de demande de poussée, le procédé comprenant :
la réception du paramètre de demande de poussée via un dispositif de commande ;
la réception de la masse de carburant d'un écoulement de carburant à partir d'un capteur de dosage massique de carburant ;
la réception de la pression d'un écoulement de carburant signalé par un capteur de pression d'écoulement de carburant ;
la fourniture d'un paramètre d'écoulement de carburant souhaité via le dispositif de commande, dans lequel le paramètre d'écoulement de carburant souhaité est déterminé à l'aide de la demande de poussée reçue, de la masse de carburant de l'écoulement de carburant et de la pression de l'écoulement de carburant ;
la fourniture d'un écoulement de carburant via une pompe à carburant à cylindrée variable, comportant :
un corps de pompe ;
un cylindre disposé à l'intérieur du corps de pompe ; et
au moins un piston disposé dans le cylindre, dans lequel l'au moins un piston est configuré pour effectuer un mouvement alternatif à l'intérieur du cylindre pour fournir l'écoulement de carburant ; et
la rotation du cylindre de la pompe à carburant à cylindrée variable à un angle du cylindre sélectionné par rapport à l'au moins un piston en réponse au paramètre d'écoulement de carburant souhaité via un actionneur de commande électronique.

6. Procédé selon la revendication 5, dans lequel l'actionneur de commande électronique est un actionneur rotatif électronique.

7. Procédé selon la revendication 5, dans lequel l'actionneur de commande électronique est un actionneur linéaire électronique.

8. Procédé selon la revendication 5, dans lequel l'actionneur de commande électronique comporte un servomécanisme.
